(19) Europäisches Patentamt
European Patent Office
Office européen des brevets

(11) **EP 0 737 633 B1**

(12) **EUROPÄISCHE PATENTSCHRIFT**

(45) Veröffentlichungstag und Bekanntmachung des Hinweises auf die Patenterteilung:
**09.06.1999 Patentblatt 1999/23**

(51) Int. Cl.$^6$: **B65G 15/08**, B65G 15/60

(21) Anmeldenummer: 96105441.8

(22) Anmeldetag: **04.04.1996**

(54) **Schlauchgurt-Fördereinrichtung**

Tubular belt conveyor

Transporteur à courroie tubulaire

(84) Benannte Vertragsstaaten:
**CH DE DK FR IT LI PT SE**

(30) Priorität: **12.04.1995 DE 19513216**

(43) Veröffentlichungstag der Anmeldung:
**16.10.1996 Patentblatt 1996/42**

(73) Patentinhaber:
**FAM Magdeburger Förderanlagen und Baumaschinen GmbH
39112 Magdeburg (DE)**

(72) Erfinder:
• **Eckardt, Günter, Prof.
39126 Magdeburg (DE)**

• **Petermann, Lutz, Dipl.-Ing.
39167 Niederndodeleben (DE)**

(74) Vertreter:
**Brommer, Hans Joachim, Dr.-Ing. et al
Lemcke, Brommer & Partner
Patentanwälte
Postfach 11 08 47
76058 Karlsruhe (DE)**

(56) Entgegenhaltungen:
**WO-A-86/04042          GB-A- 2 132 970**

• **PATENT ABSTRACTS OF JAPAN vol. 9, no. 245 (M-418) [1968] , 2.Oktober 1985 & JP-A-60 097103 (TSUBAKIMOTO BARUKU SYSTEM), 30.Mai 1985,**

**Beschreibung**

Die Erfindung betrifft eine Fördereinrichtung für Produkte beliebiger Konsistenz unter Verwendung eines umlaufenden, endlosen Förderbandes, das ein in Förderrichtung laufendes Fördertrum und ein zurücklaufendes Leertrum bildet, wobei zumindest das Fördertrum durch Führungselemente, insbesondere Rollen, nach einer Aufgabestation für das zu fördernde Produkt in eine Schlauchform bringbar und vor einer Abwurfstation wieder zu öffnen ist.

Derartige Schlauchgurtförderer sind in zahlreichen Ausführungsformen bekannt. Dabei wird das Produkt auf das mehr oder weniger flach geführte Förderband aufgegeben, das Förderband anschließend durch entsprechend angeordnete Führungsrollen schlauchförmig gemuldet, bis die Abwurfstation erreicht ist, wo das Förderband wieder geöffnet wird. Verdrehungen des Schlauches zwischen Aufgabe- und Abwurfstation sind in der Regel unerwünscht, da man die Überdeckung des schlauchförmig gemuldeten Bandes vorzugsweise oben halten möchte, damit kein Förderprodukt austreten kann, vgl. DE-A 40 42 032.

Außerdem ist es durch das deutsche Gebrauchsmuster 91 00 742 bekannt, den Schlauch im Bereich der Abwurfstellen einer begrenzten Verdrehung zu unterziehen, um das Produkt an unterschiedlichen Seiten abwerfen zu können.

Die Hauptnachteile der bekannten Lösungen liegen einerseits in dem hohen Aufwand für die Führungsrollen, die im allgemeinen in kurzen Abständen den Schlauchgurt über seinen gesamten Umfang umgeben müssen. Andererseits in der relativ geringen Steigfähigkeit der Förderbahn, weil bei steileren Anstiegswinkeln das Förderprodukt im Schlauch zurückstürzen kann mit nicht beherrschbaren Folgen für das Förderband, die Dichtheit des Förderschlauches und für das Förderprodukt selbst.

Eine Fördereinrichtung mit den Merkmalen des Oberbegriffes von Patentanspruch 1 ist durch die WO-A-86/04042 bekannt. Dabei ist das Fördertrum zwischen Aufgabe- und Abwurfstation verdrillt eingebaut und führt eine ständige Rotation um seine Längsachse durch. Seine Führung zwischen Aufgabe- und Abwurfstation erfolgt allein durch die beiden endständigen Umlenkrollen. Daher ist die Länge der Förderstrecke sehr begrenzt. Außerdem müssen die Umlenkrollen bezogen auf die Schlauchachse unter einem gewissen Neigungswinkel angeordnet werden. Das Einstellen und Einhalten dieses Neigungswinkels an den Umlenkrollen kann in der Praxis problematisch werden.

Hiervon ausgehend liegt die Aufgabe der vorliegenden Erfindung darin, die bekannten Schlauchgurtförderer hinsichtlich der Anlagekosten wie auch hinsichtlich ihrer Steigfähigkeit bzw. bei horizontaler Förderstrecke hinsichtlich ihrer erreichbaren Förderlänge zu verbessern.

Diese Aufgabe wird erfindungsgemäß durch die kennzeichnenden Merkmale des Anspruches 1 gelöst.

Die Zuordnung der Führungselemente zum Überlappungsbereich des Förderbandes ist möglich, weil der Schlauch eine schraubengangförmige Bewegung durchführt und somit sein Überlappungsbereich bezogen auf den Schlauchumfang ortsfest bleibt.

Wird das Fördertrum einer hohen Zugspannung zwischen Aufgabe- und Abwurfstation unterzogen, so läuft es theoretisch geradlinig und rotiert um seine momentane Längsachse. In der Praxis führt die Rotation aber zu einer Ausbeulung des Schlauches und damit diese einen kontrollierten Verlauf beibehält, empfiehlt es sich, die Führungselemente für den Schlauch so anzuordnen, daß der Schlauch einer leichten Umlenkung unterzogen wird. Er führt dann also eine räumliche wendelförmige Bewegung durch.

Hinsichtlich der Ausbildung des Förderbandes empfiehlt es sich, daß es in seinem Mittelabschnitt aus hochelastischem Material besteht, wogegen an beiden Rändern durchlaufende Verstärkungen in Form flach anschließenden oder aufliegenden Randstreifen oder Riemen hoher Zugfestigkeit angeordnet sind. Das Mittelteil, das etwa doppelt so breit ist wie ein Randstreifen, soll also zugelastisch sein, die Randstreifen hingegen zugsteif - jeweils bezogen auf die Förderrichtung. Dies hat den Vorteil, daß die Führungselemente, Rollen oder dergl. die den Überlappungsbereich des Schlauches abstützen, mit den verschleißfesten zugtragenden Riemen korrespondieren, wogegen sich das durch die Fliehkraft beaufschlagte Produkt an der gegenüberliegenden Schlauchwand sammelt, weil der Schlauch um die Randstreifen, quasi um die Spaltmitte rotiert.

Weitere Merkmale und Vorteile der Erfindung ergeben sich aus der nachfolgenden Beschreibung eines Ausführungsbeispieles anhand der Zeichnung; dabei zeigt

| | |
|---|---|
| Figur 1 | die Draufsicht auf einen Förderbandabschnitt in Schlauchform mit 180°-Drehung; |
| Figur 2 | einen Schnitt durch den Förderbandabschnitt längs der Linie A-A in Figur 1; |
| Figur 3 | die Draufsicht auf ein Förderband in Schlauchform mit 360°-Drehung; |
| Figur 3a | eine Ansicht auf das Förderband von Figur 3 in Transportrichtung gesehen; |
| Figur 4 | einen Schnitt durch das Förderband in geöffneter Form an einer Führungsrolle; |
| Figur 5 | das Beispiel einer einfachen Linienführung des Förderbandes; |
| Figur 6 | die Draufsicht auf einen gerade und in Kurve verlaufenden Streckenabschnitt eines weitgehend horizontalen Langstreckenförderers mit zumindest teilweise angetriebenen Rollen; |
| Figur 7 | einen Schnitt durch die Förderstrecke längs der Linie A-A in Figur 6; |
| Figur 8 | eine Antriebsstation im Schnitt durch die |

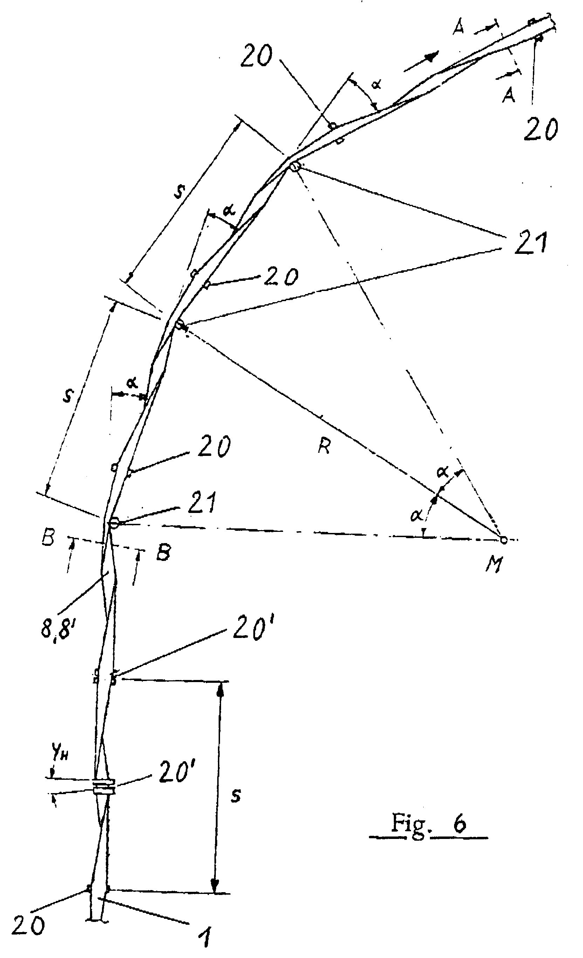

Förderstrecke längs der Linie B-B in Figur 6;

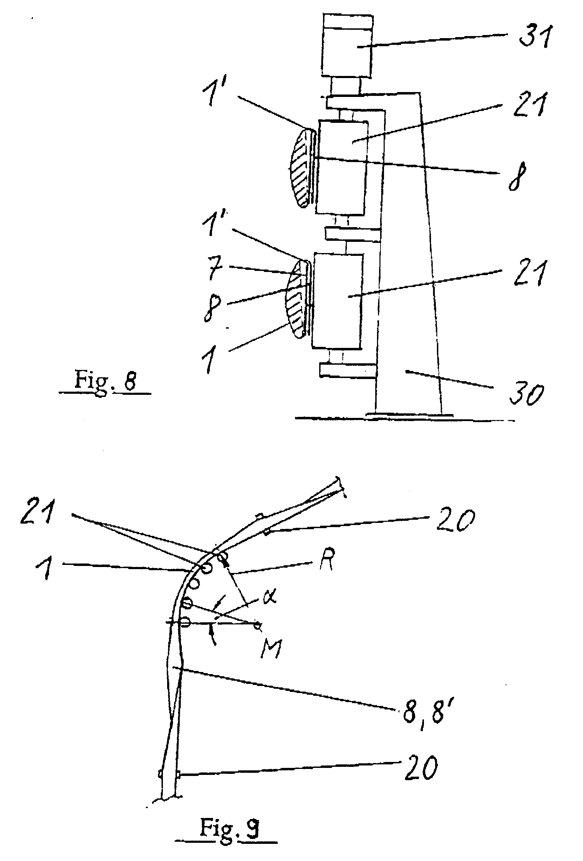

Figur 9     eine Draufsicht auf einen Kurvenabschnitt mit kleinem Radius.

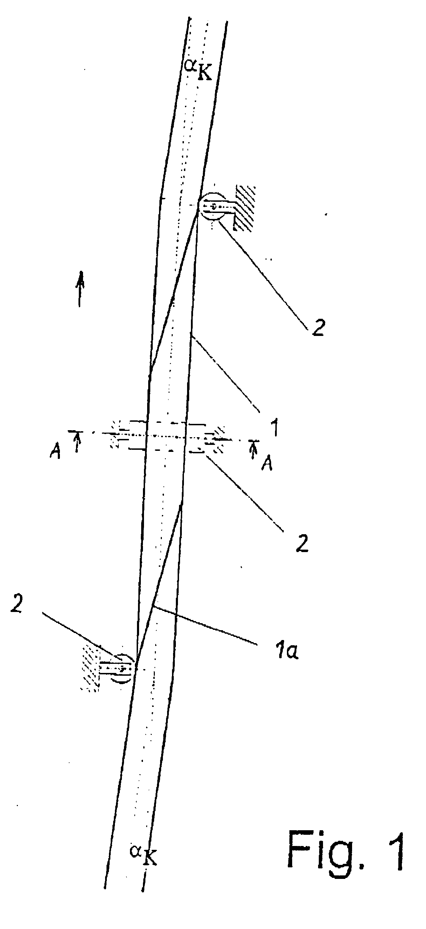

In Figur 1 erkennt man einen Abschnitt der Förderstrecke, in dem das Förderband 1 durchgehend in Schlauchform vorliegt. Es hat also bereits die Aufgabestation, wo es zur Aufgabe des zu fördernden Produktes in einer offenen, meist gemuldeten Form geführt wird, verlassen, die Abwurfstation, wo die Schlauchform wieder geöffnet und das Produkt ausgeworfen wird, aber noch nicht erreicht. Gleichermaßen kann sich der in Figur 1 gezeigte Abschnitt aber auch auf den Rücklauf von der Abwurfstation zur Aufgabestation beziehen, denn auch das Leertrum kann zwischen diesen Stationen in Schlauchform geführt werden.

Die Abstützung und Führung des Förderbandes 1 erfolgt durch mehrere an sich bekannte Rollen 2, wobei jedoch jede nachfolgende Rolle um einen bestimmten Winkel in Umfangsrichtung des Förderband versetzt angeordnet ist, im Ausführungsbeispiel jeweils um 90° bzw. 180° versetzt. Außerdem sind die Führungsrollen 2 derart positioniert, daß das Förderband 1 nicht ganz geradlinig die Rollen passieren kann sondern einen leichten Knickwinkel $\alpha_K$ durchfährt, weil die Rollen jeweils ein Stück in die gedachte Transportrichtung hineinversetzt sind.

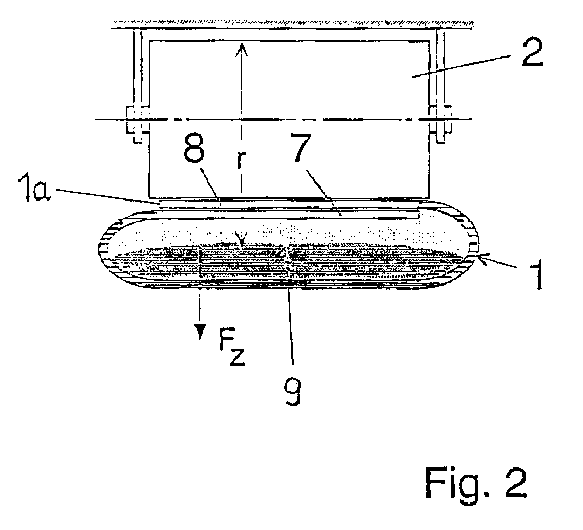

Wesentlich ist nun, daß das Förderband 1, sobald es in Transportrichtung angetrieben wird, eine Rotation durchführt. Zu diesem Zweck ist das Förderband zwischen den nicht dargestellten Rollen am Anfang und Ende der Förderstrecke verdrillt eingebaut, je nach Länge der Steigung s zwischen benachbarten Führungsrollen 2 um beliebige Winkel, vorzugsweise aber um 90°, 180°, 360° oder ein Mehrfaches hiervon. Man erkennt diesen verdrillten Einbau in Figur 1 durch den schraubenförmigen Verlauf des außenliegenden Randes 1a des Förderbandes. Dieser Rand behält seine Lage auch bei umlaufendem Förderband bei, und daher können die Rollen 2 stets so angeordnet werden, daß der durch das Förderband gebildete Schlauch mit demjenigen Umfangsbereich an den Rollen anliegt, wo die Förderbandränder sich überlappen, vergleiche Figur 2.

Die Rollen bewirken also nicht nur die herkömmliche Bandführung, sondern sie unterstützen durch Ihre Anpressung im Überlappungsbereich auch die Dichtheit des Schlauches, was äußerst vorteilhaft ist.

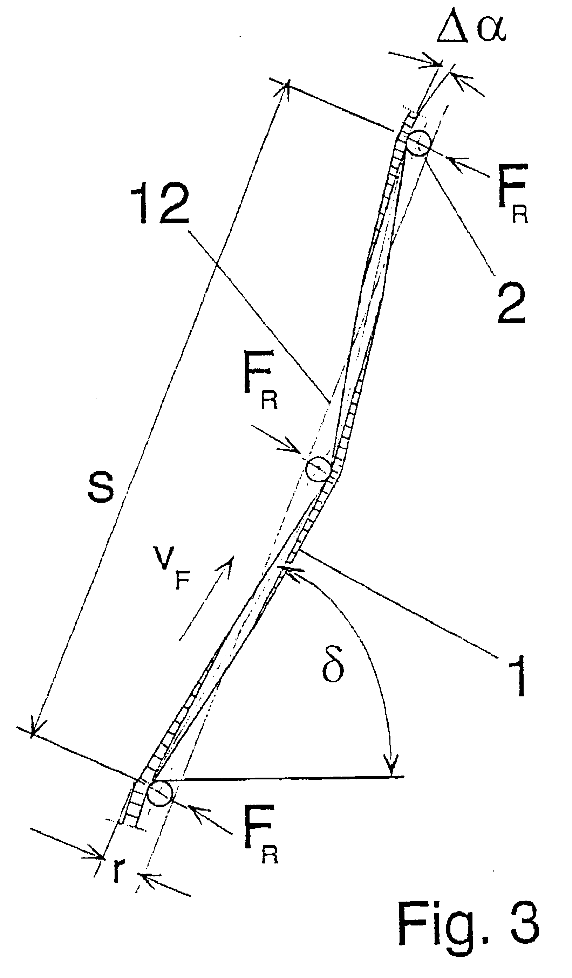

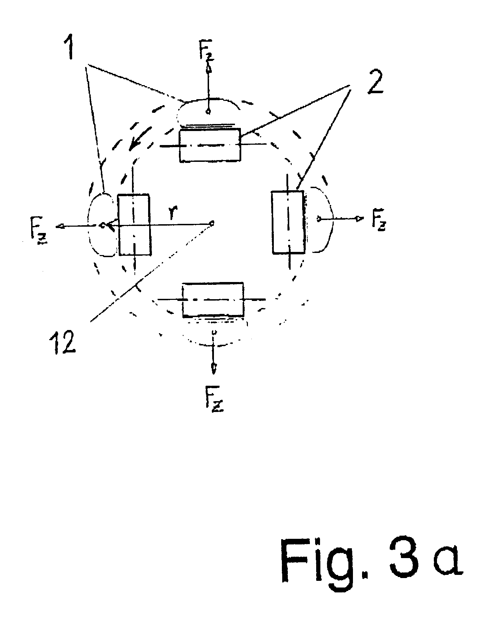

Die Figuren 3 und 3a zeigen eine Förderbandstrecke, bei der der Schlauch eine Drehung um 360° durchführt, wobei der mittlere Bereich des Förderbandes (ohne die sich überlappenden Randstreifen) durch eine Querstrichelung markiert wurde. Man erkennt dabei, daß der Schlauch nicht genau um seine eigene Achse rotiert sondern sich schraubengangförmig um die durch das Bezugszeichen 12 markierte Achse herumwindet. Diese Bewegung erzeugt an den im Schlauch befindlichen Teilchen des Förderproduktes eine Fliehkraft $F_2$ - siehe Figur 2 -, die aufgrund der zuvor beschriebenen Positionierung der Rollen 2 jeweils vom Überlappungsbereich der randseitigen Förderbandstreifen 7 und 8 weggerichtet ist und das Fördergut gegen die gegenüberliegende Schlauchwand 9 drückt.

Die beschriebene Bewegung längs einer Zylinderfläche mit Radius ist nicht zwingend nötig. Es genügt auch eine Auslenkung in einer Ebene entsprechend der Radiuslänge wie in Figur 3. Dies gilt insbesondere bei Langstrecherförderern, wo eine rein vertikale Auslenkung bevorzugt wird.

Bezeichnet $\zeta$ den Winkel der inneren Reibung des Förderproduktes bzw. der Reibung zwischen Förderprodukt und Förderband-Innenseite, r den Radius der Schraubenlinie, auf dem ein Produktteilchen um die Achse 12 rotiert, $\delta$ den Neigungswinkel des Förderbandes gegenüber der horizontalen, s die Steigung der Schlauchverdrillung, also die Schlauchlänge zur Erzeugung einer 360°-Drehung und $k \leq 1$ eine dimensionslose Konstante, so errechnet sich die Mindestgeschwindigkeit $v_F$ des Förderbandes zu

$$v_F = k \cdot \frac{s}{2\pi} \sqrt{\frac{g}{r}\left(\frac{\sin \delta}{\tan \rho} - \cos\delta\right)}$$

Dabei wird das zu fördernde Medium durch Reibkraft mehr oder weniger an der Schlauchinnenwand festgehalten.

Zahlenangaben für ein konkretes Ausführungsbeispiel könnten wie folgt lauten:

| | |
|---|---|
| Steigung s | = 3 m |
| Radius r | = 0,1 m |
| Steigungswinkel $\delta$ | = 75° |
| Reibungswert tan $\zeta$ | = 0,2 |
| Konstante k | = 1 |

Daraus ergibt sich eine Mindestgeschwindigkeit $v_F$ = 10,67 m/s.

Bei gleichbleibenden Anlagen- und Produktparametern ergibt sich die Mindestgeschwindigkeit direkt proportional der Steigung s, das heißt je stärker die Verdrillung, desto höher ist die Fliehkraft und desto geringer kann die Fördergeschwindigkeit gewählt werden.

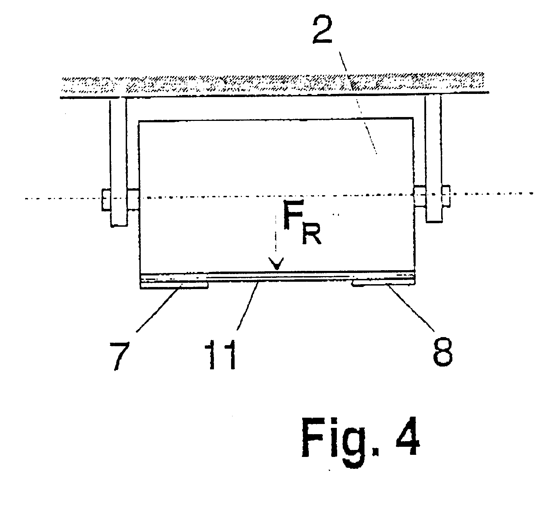

Figur 4 zeigt das Förderband 1 in geöffneter flacher Form. Es besteht aus einem stark-elastischen Mittelabschnitt 11 und zwei endständigen Randstreifen 7 und 8, die sich fluchtend an den Mittelabschnitt anschließen oder, wie in Figur 4, auf diesem geklebt, geschweißt oder aufgenäht sind, aber eine hohe Zugfestigkeit aufweisen, etwa indem sie zugtragende Einlagen aufweisen. Praktisch besteht das Förderband also aus zwei steifen, verschleißfesten, außenseitig angeordneten Treibriemen 7 und 8, die insgesamt etwa die halbe Breite des gesamten Förderbandes ausmachen und aus einem dazwischenliegenden stark-elastischen Streifen 11, der die Muldung des flachen Förderbandes in die Schlauchform und zurück gestattet.

Die schraubenförmige Drehung des Förderbandschlauches in Verbindung mit den im Überlappungsbereich angeordneten Rollen 2 erzeugt Schließkräfte, die ein ungewolltes Öffnen des Schlauches selbst ohne Führung durch die Rollen 2 verhindern. Gleichzeitig bewirkt die breitflächige Überlappung der beiden randseitigen Abschnitte 7 und 8 des Förderbandes eine hohe Abdichtung; dadurch kommt es im Inneren des Schlauches zu einem Unterdruck gegenüber der Umgebung, so daß selbst an undichten Stellen das Fördermedium nicht ausströmen kann, sondern allenfalls Umgebungsluft in das Schlauchinnere gelangt. Außerdem wird das Fördermedium durch die Fliehkraft von der Überlappung ferngehalten, weil der Schlauch um die Spaltmitte rotiert. Dadurch ist die erfindungsgemäße Fördereinrichtung nicht nur für Schüttgüter sondern auch für Feststoffgemische mit Gas- oder Flüssigkeitsanteilen sowie für sonstige Medien geeignet, die sich nach den Gesetzen der pneumatischen oder hydraulischen Rohrförderung nahezu mit der Geschwindigkeit des Förderbandes bewegen.

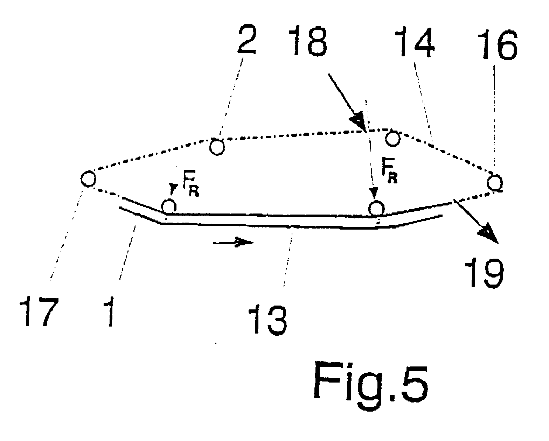

Figur 5 zeigt ein einfaches Beispiel einer endlosen Führung des Förderbandes 1 mit einer Einzelstrecke 13 des geschlossenen Schlauches, einer Einzelstrecke 14 des geöffneten Schlauches, einer Antriebsstelle 16, einer Spannstelle 17, einer Aufgabestation 18 und einer Abwurfstation 19. Dabei ist der Schlauch zumindest im Bereich der Einzelstrecke 13, wo er in geschlossener Form vorliegen soll, mehrfach gedrillt zwischen den endständigen Umlenkrollen 16 und 17 eingebaut, so daß es dort zur gewünschten Rotation kommt. Diese Verdrillung kann im Bereich der Einzelstrecke 14 wieder rückgängig gemacht werden, notwendig ist dies aber nicht.

Wesentliches Funktionselement des beschriebenen Drehförderers sind die beiden parallel aneinander anliegenden flachen Randstreifen 7, 8, die jeweils an den Führungsrollen 2 entlang laufen und dadurch als Führungs- und Zugmittel fungieren. Dabei sind die aufeinander folgenden Führungsrollen relativ zum Schlauchumfang so positioniert, daß die Randstreifen des Gurtes, solange er die Schlauchform einnehmen soll, eine gerade Schraubenfläche mit bestimmter Schraubensteigung bilden. Man kann dadurch mit zylindrischen Führungsrollen arbeiten, woraus eine homogene Anpressung der beiden aneinander liegenden Randstreifen mit entsprechend guter Abdichtwirkung resultiert. Der zwischen den Randstreifen 7 und 8 befindliche Zwischenbereich des Gurtes kann demgegenüber gleichmäßig flexibel ausgebildet sein, braucht also insbesondere nicht eine quer verlaufende Verstärkung aufzuweisen, die sich an den Randstreifen empfiehlt, um diese gegenüber der Bandlängsachse biegesteif auszubilden. Vor allem sollen die Randstreifen die Übertragung der Zugkräfte übernehmen.

Dadurch daß die sich überdeckenden zugtragenden Randstreifen des zum Schlauch geschlossenen Fördergurtes eine nahezu gerade Schraubenfläche bilden, läßt sich der Fördergurt durch Umlenkrollen in jede beliebige Richtung ablenken, wenn die Rollendrehachse rechtwinklig zur Längsachse der geraden Schraubenfläche angeordnet wird. Des weiteren ergibt sich der Vorteil, daß sich der Fördergurt über seinen äußeren Randstreifen durch die wie vorgenannt positionierten Rollen antreiben läßt; die Zugkraft im Gurt steigt also nicht mehr kontinuierlich mit der Förderlänge an, so daß theoretisch das Realisieren beliebiger Förderlängen möglich wird, Die Größe der erforderlichen Zugkraft des endlosen Zugmittels wird nur noch von dem zulässigen Durchhang bestimmt und damit auf das erforderliche Minimum reduziert.

Während bei den bekannten Gurtförderern ohne Zwischenantrieb der Aufwand für die Kurvenabstützung im Bereich hoher Gultzugkräfte erheblich ansteigt, bleibt der Kurvenführungsaufwand bei der erfindungsgemäßen Lösung unabhängig von der Länge der Förderstrecke. Dies wird nachfolgend am Beispiel eines Langstreckenförderers gemäß den Figuren 6 bis 9 näher erläutert.

Der Fördergurt 1 verläuft gemäß Figur 6 im wesentlichen in einer Horizontalebene, wobei er einerseits durch Laststützrollen 20 und Kurvenumlenkrollen 21 geführt wird. Im Ausführungsbeispiel sind erstere horizontal unter den Randstreifen, letztere vertikal kurveninnenseitig des Randstreifens angeordnet. Man erkennt in Figur 1, daß dann die Laststützrollen 20 immer im Abstand der Schraubenflächensteigung s oder einem Mehrfachen davon aufeinanderfolgen und daß diese Bedingung gleichermaßen für die Kurvenumlenkrollen 21 gelten muß. Es liegt selbstverständlich im Rahmen der Erfindung, die Rollen nicht genau horizontal oder vertikal anzuordnen, sondern sie insbesondere in Kurvenabschnitten schräg anzuordnen, derart, daß ihre Achse etwa senkrecht zur Resultierenden aus der vertikal wirkenden Gewichtskraft von Gurt und Fördergut einerseits und der etwa horizontal wirkenden Gurtspannkraft andererseits verläuft. Sie müssen dann natürlich gegenüber einer rein horizontalen oder rein vertikalen Rollenachse in Förderrichtung versetzt sein, denn grundsätzlich sollen die Rollen 20 und 21 stets flächig an der Außenseite des Gurtrandstreifens 8 anliegen, wie in Figur 2 dargestellt, und zwar gleichgültig, ob die Rollen 20 bzw. 21 eine reine Tragefunktion für die Eigenlast oder eine reine Umlenkfunktion für den Gurt oder eine Kombination beider Funktionen erfüllen sollen.

Wie Figur 6 erkennen läßt, weist die vom äußeren Randstreifen 8 gebildete gerade Schraubenfläche 8' über die gesamte Förderstrecke eine vorzugsweise konstante Steigung s auf. Die Laststützrollen 20 sind an den Stellen positioniert, wo die Schraubenfläche 8' ihre untere horizontale Lage einnimmt, und die Kurvenumlenkrollen 21 an den kurveninnenseitigen Stellen, wo die Schraubenfläche 8' an der Kurveninnenseite eine vertikale Lage einnimmt.

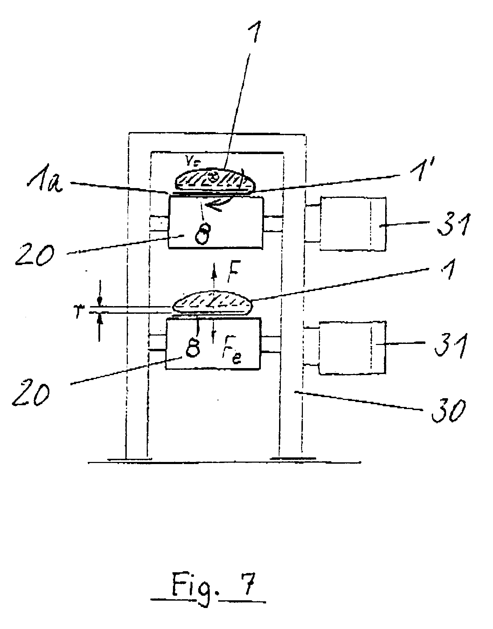

Figur 7 zeigt eine Antriebsstation 30 mit zwei übereinander angeordneten Laststützrollen 20 für das Obertrum und das Untertrum des Fördergurtes 1. Beide Rollen 20 werden durch eigene Antriebe 31 in Drehung versetzt, um das Obertrum nach vorn, das Untertrum in Gegenrichtung anzutreiben. Dabei kann das Untertrum für die Rückförderung ausgenutzt werden, was bei Langstreckenförderern häufig erwünscht ist.

Aus der Bedingung, daß bezogen auf Figur 7 die auf das Fördergut wirkende, durch die Schlauchrotation erzeugte Fliehkraft größer sein soll als die Eigenlast $F_e$ des Fördergutes, gewinnt man den Zusammenhang zwischen dem Radius r mit dem das Fördergut um die Mitte des Randstreifens 8 rotiert, der Steigung s und der erforderlichen Fördergeschwindigkeit $V_F$ zu

$$V_F > \frac{s}{2\pi}\sqrt{\frac{g}{r}}$$

Zahlenangaben für ein konkretes Ausführungsbeispiel sollen die an das Funktionsprinzip gebundene hohe Fördergeschwindigkeit verdeutlichen: bei einem Fördergutquerschnit von 0,025 m² ist mit einem Drehradius r = 0,07 m von der Spaltmitte bis zur Oberfläche des Fördergutes gerechnet zu rechnen. Bei einer Steigung s von 5 m ergibt sich aus obiger Formel eine Mindestfördergeschwindigkeit von 9,42 m/s und ein Volumenstrom vom 848 m³/h.

Zur Gewährleistung des Förderbandantriebes ist bei horizontaler Linienführung nur etwa jede 10. bis 15. Station als Antriebsstation auszuführen, dazwischen können gleichartige nichtangetriebenen Lasttragstationen vorgesehen sein.

Jede angetriebene Rolle überträgt etwa gleiche Antriebskräfte auf den zugtragenden Randstreifen 8, wobei ein Maximalwert (Normalkraft multipliziert mit Reibungsbeiwert) nicht überschritten wird. Setzt man konstanten Fördergutstrom voraus und läßt sonstige Normabweichungen außer acht, dann ist die Zugkraft im Randstreifen an jeder Antriebsstelle des beliebig langen Förderers gleich groß, sie schwankt zwischen den Antriebsstellen nur um die Größe der Umfangskraft einer angetriebenen Rolle. Dadurch ist die Gurtzugkraft wesentlich geringer als bei einem nur endständig angetriebenen Schlauchförderer.

Die hohen Fördergeschwindigkeiten von 10 bis 20 m/s werden möglich, weil im Vergleich zu herkömmlichen Schlauchförderern andere Führungs- und Schwingungsverhältnisse vorliegen. So erfolgt die Gurtführung durch die am äußeren Randstreifen 8 angreifenden Rollen quasi formschlüssig, weil ein Drehen oder seitliches Auswandern ausgeschlossen ist. Wegen der sehr geringen Schwankung der Zugkraft im Gurt und der längsverteilten Einleitung der Antriebskraft ist die Gefahr einer Eigenschwingung des Gurtes bedeutungslos. Demgegenüber war wegen der nur kraftschlüssigen Führungsverhältnisse und der Gefahr der Eigenschwingung die Fördergeschwindigkeit bei herkömmlichen Schlauchförderern auf etwa 7 bis 8 m/s begrenzt.

Ein weiterer Vorteil der Zwischenantriebe liegt darin, daß die für lange Förderstrecken sonst erforderlichen Anlaufhilfen entfallen können. Wegen der längsverteilten Einleitung der Antriebskräfte und der reibschlüssigen Kraftbegrenzung für jeden Antrieb kann man während der Anlaufzeit Dauerschluß zwischen Antriebsrolle und Gurt zulassen, wobei der Verschleiß weit unter den zulässigen Werten liegt.

Figur 8 zeigt die Ansicht einer Kurvenumlenkstation in Förderrichtung. Dabei sind die Umlenkrollen für das Obertrum und das Untertrum koaxial übereinander angeordnet und zumindest die obere Umlenkrolle kann mit einem Antriebsmotor 31 verbunden sein; zusätzlich kann aber auch die untere Umlenkrolle über ein Umkehrgetriebe mit ihm verbunden sein.

Wie Figur 8 außerdem erkennen läßt ist die Überlappung der beiden Randstreifen 7 und 8 des Fördergurtes 1 so gewählt, daß in Kurvenabschnitten das innenliegende Ende 1' des Spaltes zwischen beiden Randstreifen 7 und 8 oben liegt, weil dann das Fördergut optimal am Entweichen durch den Spalt gehindert wird.

Aus dem gleichen Grund wird die Schlauchrotation - vgl. Figur 7 - vorzugsweise so gewählt, daß der außenliegende Längsrand 1 a des Förderbandes in Drehrichtung weist, weil dann bei Rechtsdrehung des Förderbandes die träge Fördergutsäule den inneren Spalt 1' in Einströmrichtung und nicht in Ausströmrichtung überstreicht und eher Luft aus der Umgebung in das Schlauchinnere gefördert wird als umgekehrt.

Es sei noch erwähnt, daß die Stützrollen 20 und die Führungsrollen 21 gemäß Figur 6 auch als Doppelsturzrollen 20' ausgebildet sein können. Durch Einbau der Rollen unter einem Horizontalsturzwinkel $Y_H$ und eines in der Zeichnung nicht sichtbaren Vertikalsturzwinkels zwischen den beiden unmittelbar aufeinanderfolgenden Rollen erhält man eine sich selbst einstellende Zentrierung des über diese Doppelrolle laufenden schlauchförmigen Förderbandes.

Aus der Unabhängigkeit der Zugkraft von der Länge des Förderbandes folgt als weiterer Vorteil eine Reduzierung der möglichen Kurvenradien in der Streckenführung. Während bei langen Gurtförderern im Bereich der hohen Gurtzugkräfte Kurvenradien nicht unter 1000 Metern erreichbar sind, können mit der erfindungsgemäßen Lösung Radien unter 100 Metern realisiert werden. Gemäß Figur 6 gilt näherungsweise für den Krümmungsradius R=s/$\alpha$ Man kann die Steigung mit s=5 m bis 10 m annehmen und den zulässigen Knickwinkel für die Linienführung mit $\alpha$=5° bis 10°. Damit ergeben sich ausführbare Kurvenradien von unter 30 m bis 100 m.

Noch engere Kurvenradien lassen sich durch die Bauform nach Figur 9 realisieren. Dabei werden mehrere Kurvenumlenkrollen 21 relativ dicht im Abstand von 1 bis 3 Meter hintereinander angeordnet. Mit Knickwinkeln $\alpha$ von 5° bis 10° pro Umlenkrolle ergeben sich ausführbare Kurvenradien von 6 m bis 30 m.

In den Kurvenabschnitten nach Figur 9 führt der schlauchförmige Fördergurt Keine Rotation mehr durch, damit der Randstreifen 8 an allen aufeinanderfolgenden Umlenkrollen 21 in Anlage bleibt; erst danach beginnt wieder seine Rotation. Die für die Förderfunktion notwendige Fliehkraft auf das Fördergut wird im Kurvenabschnitt also nicht mehr durch die Drehung des Schlauches um seine Achse, sondern durch die Drehung des am Randstreifen 8 anliegenden Förderbandes um den Drehpunkt M erzeugt. Damit sind die erreichbaren Kurvenradien etwa um eine Zehnerpotenz kleiner und weder von der Länge der Förderstrecke noch von der Zugkraft abhängig.

Zusammenfassend liegen die Vorteile der vorliegenden Erfindung darin, daß sowohl der apparative Aufwand für die Führungsrollen drastisch verringert wird, als auch die Effektivität der Schlauchgurtförderung erheblich verbessert und dadurch auch auf die Steil- und Senkrechtförderung sowie auf die Langstreckenförderung erweitert wird, wobei Belastungen der Umwelt durch austretendes Förderprodukt weitgehend ausgeschlossen sind.

**Patentansprüche**

1. Fördereinrichtung für Produkte beliebiger Konsistenz unter Verwendung eines umlaufenden, endlosen Förderbandes (1), das ein in Förderrichtung laufendes Fördertrum und ein zurücklaufendes Leertrum bildet, wobei zumindest das Fördertrum durch Führungselemente, insbesondere Rollen (2), nach einer Aufgabestation (18) für das zu fördernde Produkt in eine Schlauchform bringbar und vor einer Abwurfstation (19) wieder zu öffnen ist, und das Fördertrum zumindest in einem Teilbereich der Förderstrecke zwischen Aufgabe- und Abwurfstation (18 bzw. 19) durch verdrillten Einbau des Fördertrums eine ständige Rotation annähernd um seine momentane Längsachse oder eine dazu etwa parallele Achse (12) durchführt, deren Winkelgeschwindigkeit so bemessen ist, daß die entstehende Fliehkraft das Förderprodukt gegen die Schlauchwand drückt, wobei das Förderband (1) einen stark-elastischen Mittelstreifen (11) und an den Rändern durchlaufende Verstärkungen in Form von Randstreifen (7, 8) hoher Zugfestigkeit aufweist,
dadurch gekennzeichnet,
daß das Fördertrum Führungselemente (2) passiert, die den Schlauch vorzugsweise in dem Umfangsbereich abstützen, wo die Randstreifen (7, 8) des Förderbandes (1) aneinanderliegen, insbesondere sich überlappen, so daß die Randstreifen (7, 8) bei schlauchförmigem Fördertrum zumindest annähernd eine gerade Schraubenfläche bilden.

2. Fördereinrichtung nach Anspruch 1,
dadurch gekennzeichnet,
daß das Verdrillen des Förderbandes (1) wechselweise rechts- und linkgsgängig erfolgt.

3. Fördereinrichtung nach Anspruch 1,
dadurch gekennzeichnet,
daß das n-fache Verdrillen des Förderbandes (1) durch eine n-fache Drehung der Enden des Förderbandes vor dem Endlosmachen erzeugt wird.

4. Fördereinrichtung nach Anspruch 1,
dadurch gekennzeichnet,
daß eine n-fache Verdrillung des Förderbandes (1) auf einer bestimmten Strecke durch eine n-fache Rückdrehung auf einer anderen Strecke aufgehoben wird.

5. Fördereinrichtung nach Anspruch 1,
dadurch gekennzeichnet,
daß die Führungselemente (2) das Förderband (1) in Form eines Schlauches jeweils einer leichten Umlenkung unterwerfen.

6. Fördereinrichtung nach Anspruch 1,
dadurch gekennzeichnet,
daß die Randstreifen (7,8) sich fluchtend an den Mittelstreifen (11) anschließen oder daß sie aufliegen.

7. Fördereinrichtung nach Anspruch 1,
dadurch gekennzeichnet,
daß der Antrieb des Förderbandes (1), insbesondere bei schlauchförmiger Konfiguration, durch eine Vielzahl in Förderrichtung mit Abstand aufeinanderfolgender angetriebener Rollen (20, 21) erfolgt, die derart positioniert sind, daß sie mit ihrer Umfangsfläche am außenliegenden Randstreifen (5) des Förderbandes (1) anliegen.

8. Fördereinrichtung nach Anspruch 7,
dadurch gekennzeichnet,
daß die angetriebenen Rollen (20) bei etwa geradlinigen Abschnitten des Förderbandes annähernd im Abstand der einfachen oder mehrfachen Schraubenflächensteigung (s) an Stellen, wo die gerade Schraubenfläche des Randstreifens (8) nahezu horizontale Lage aufweist, angeordnet sind.

9. Fördereinrichtung nach Anspruch 7,
dadurch gekennzeichnet,

daß die angetriebenen Rollen (21) bei Kurvenabschnitten des Förderbandes (1) annähernd im Abstand der einfachen oder mehrfachen Schraubenflächensteigung (s) an Stellen, wo die gerade Schraubenfläche des Randstreifens (8) schräge bis nahezu vertikale Lage aufweist, angeordnet sind.

10. Fördereinrichtung nach Anspruch 1,
dadurch gekennzeichnet,
daß dicht aufeinanderfolgende Doppelsturzrollen (20') mit einem Horizontalsturzwinkel und einem Vertikalsturzwinkel zur Zentrierung des Förderbandes (1) vorgesehen sind.

11. Fördereinrichtung nach Anspruch 1,
dadurch gekennzeichnet,
daß die Drehrichtung des schlauchförmigen Förderbandes (1) so gewählt ist, daß der außenliegende Längsrand (1a) in Drehrichtung weist.

12. Fördereinrichtung nach Anspruch 1,
dadurch gekennzeichnet,
daß an Kurvenumlenkrollen (21) das innenliegende Ende (1') des Randspaltes zwischen den beiden sich überlappenden Randstreifen (7, 8) oben liegt.

## Claims

1. Conveyor for products of any consistency by means of a circulating endless conveying belt (1) forming a carrying strand running in conveying direction and a return strand runing in the opposite direction, in which at least the carrying strand may by guiding elements, namely the idlers (2), be brought into a tubular form behind a feeding station (18) for the product to be conveyed and be opened again in front of a discharge station (19), where at least a part of the carrying strand, due to the twisted mode of carrying strand installation, permanently rotates roughly around its momentary longitudinal axis or an axis (12) located approximately in parallel to the latter, with the amount of the angular velocity of the said rotation being such that the resultant centrifugal force presses the product to be conveyed against the tubular wall, and where the conveying belt (1) has an extremely flexible centre strip (11) and reinforcements in the form of high-strength edge strips (7, 8) running through at the edges, characterized in such that the carrying strand travels over guiding elements (2) which support the tube preferentially in its circumferencial zone where the edge strips (7, 8) of conveying belt (1) are in close mutual contact, especially overlap each other such that the edge strips /7, 8) at the tubular carrying strand form an almost straight helicoid.

2. Conveyor according to claim 1,

characterized in such
that twisting of conveying belt (1) is alternately right-handed and left-handed.

3. Conveyor according to claim 1,
characterized in such that
n-times of twisting of conveying belt (1) is made by turning the conveying belt ends n-times before the belt is made endless.

4. Conveyor according to claim 1,
characterized in such that
n-times twisting of the conveying belt (1) over a certain length is neutralized by n-times of backtwist over another length.

5. Conveyor according to claim 1,
characterized in such that
the guiding elements (2) are subjecting the tubular conveying belt (1) to a slight defelection in each case.

6. Conveyor according to claim 1,
characterized in such that
the edge strips (7, 8) are in true alignment at the central strips (11) or are fully supported.

7. Conveyor according to claim 1,
characterized in such that
the conveying belt (1), especially in the tubular configuration, is driven in conveying direction by a multitude of tandem-arranged and suitably spaced driven idlers (20, 21) which are positioned such that their circumferential areas rest on the outer edge strip (8) of the conveying belt (1).

8. Conveyor according to claim 7,
characterized in such that
the driven idlers (20) in almost straight conveying belt sections are arranged approximately in a distance of the simple or multiple helicoid pitch (s) in locations where the straight helicoid of edge strip (8) has an almost horizontal position.

9. Conveyor according to claim 7,
characterized in such that
the driven idlers (21) in curved sections of conveying belt (1) are arranged almost in the distance of the simple or multiple helicoid pitch (s) in locations where the straight helicoid of the edge strip (8) takes an oblique up to almost vertical position.

10. Conveyor according to claim 1,
characterized in such that
the densely arranged dual tilting idlers (20') are provided with a horizontal tilting angle and a vertical tilting angle for centering of the conveying belt (1).

**11.** Conveyor according to claim 1,
characterized in such that
the sense of rotation of the tubular conveying belt (1) is selected so that the external longitudinal edge (1a) shows in the sense of rotation.

**12.** Conveyor according to claim 1,
characterized in such that
in the area of curve return idlers (22) the internal end (1') of edge gap between both overlapping edge strips (7, 8) is in top position.

## Revendications

**1.** Dispositif de manutention pour produits de toute consistence, utilisant une courroie transporteuse (1) tournant sans fin qui forme un brin porteur allant dans le sens de manutention et un brin vide de retour, présentant la caractéristique qu'au moins le brin porteur puisse être transformé en gaine par des éléments de guidage, notamment des rouleaux (2) aménagés en aval d'une station d'alimentation (18) du produit à transporter, qu'il puisse être rouvert en amont d'une station de jetée (19), et qu'au moins une partie du brin porteur effectue approximativement autour de son axe longitudinal instantané ou d'un axe parallèle (12) une rotation permanente dont la vitesse angulaire est telle que le produit soit pressé contre la paroi de la gaine par la force centrifuge ainsi créée, la courroie transporteuse (1) ayant une bande centrale hautement élastique (11) et des renforcements continus au niveau des bords sous forme de bandes latérales (7, 8) de haute résistance à la dilatation,
caractérisé par le fait
que le brin porteur passe par des éléments de guidage (2) qui supportent la gaine préférentiellement dans la section circonférentielle où les bandes latérales (7, 8) de la courroie (1) sont adjacentes ou, notamment, se recouvrent, de sorte que les bandes latérales (7, 8) du brin porteur en gaine forment au moins approximativement une surface hélicoïdale droite.

**2.** Dispositif de manutention tel que défini dans la revendication 1,
caractérisé par le fait
que la courroie transporteuse (1) subit un toronnage alternant vers la gauche et la droite.

**3.** Dispositif de manutention tel que défini dans la revendication 1,
caractérisé par le fait
que le nombre n de pas toronnés de la courroie transporteuse (1) est créé par le même nombre de torsions exercées aux extrémités de la courroie avant de la transformer en bande sans fin.

**4.** Dispositif de manutention tel que défini dans la revendication 1,
caractérisé par le fait
que le nombre n de pas toronnés de la courroie transporteuse (1) sur un tronçon donné est annulé par le même nombre de détorsions sur un autre tronçon.

**5.** Dispositif de manutention tel que défini dans la revendication 1,
caractérisé par le fait
que chaque élément de guidage (2) soumet la courroie transporteuse (1) en forme de gaine à un léger renvoi.

**6.** Dispositif de manutention tel que défini dans la revendication 1,
caractérisé par le fait
que les bandes latérales (7,8) rejoignent la bande centrale (11) en alignement précis ou bien qu'elles s'appuyent sur celle-ci.

**7.** Dispositif de manutention tel que défini dans la revendication 1,
caractérisé par le fait
que l'entraînement de la courroie transporteuse (1), notamment en forme de gaine, est assuré par une multitude de rouleaux tournant dans le sens de manutention (20, 21) et se succédant à intervalles, qui sont disposés de sorte que leur surface circonférentielle est appliquée contre les bandes latérales (8) de la courroie transporteuse (1).

**8.** Dispositif de manutention tel que défini dans la revendication 7,
caractérisé par le fait
que, pour les sections pratiquement rectilignes de la courroie transporteuse, les rouleaux entraînés (20) sont disposés approximativement dans les intervalles des pas hélicoïdaux simples ou multiples (s) à des endroits où la surface hélicoïdale de la bande latérale (8) est en position quasi-horizontale.

**9.** Dispositif de manutention tel que défini dans la revendication 7,
caractérisé par le fait
que, pour les sections curvilignes de la courroie transporteuse, les rouleaux entraînés (21) sont disposés approximativement dans les intervalles des pas hélicoïdaux simples ou multiples (s) à des endroits où la surface hélicoïdale plane de la bande latérale (8) est en position oblique, voire quasi-verticale.

**10.** Dispositif de manutention tel que défini dans la revendication 1,
caractérisé par le fait

que des rouleaux inclinés doubles (20') se suivant étroitement sont disposés dans un angle incliné horizontal et vertical par rapport au centrage de la courroie transporteuse (1).

11. Dispositif de manutention tel que défini dans la revendication 1,
caractérisé par le fait
que le sens de marche de la courroie transporteuse en forme de gaine (1) est choisi de sorte que le bord longitudinal extérieur (1a) pointe dans le sens de marche.

12. Dispositif de manutention tel que défini dans la revendication 1,
caractérisé par le fait
qu'au niveau des rouleaux de renvoi curvilignes (21), le bord intérieur (1') de la fente latérale se situe en haut entre les deux bandes latérales (7, 8) qui se recouvrent.

Fig. 1

Fig. 2

Fig. 3

Fig. 3 a

Fig. 4

Fig.5

Fig. 6

Fig. 7

Fig. 8

Fig. 9

18